# EUROPÄISCHE PATENTSCHRIFT

(11) **EP 3 256 656 B1**
(45) Veröffentlichungstag und Bekanntmachung des Hinweises auf die Patenterteilung: **10.04.2019**
(21) Anmeldenummer: 16712216.7
(22) Anmeldetag: 10.02.2016
(51) Int. Cl.: H02G 3/04, E04B 1/68, F16L 5/02, H02G 3/22, F16L 5/04, H02G 15/013

(54) **WIEDERVERWENDBARE SCHUTZVORRICHTUNG GEGEN WASSERFORTLEITUNG**
REUSABLE PROTECTION DEVICE TO PREVENT WATER INFILTRATION
DISPOSITIF DE PROTECTION RÉUTILISABLE CONTRE L'INFILTRATION D'EAU

(30) Priorität: 11.02.2015 EP 15154700
(43) Veröffentlichungstag der Anmeldung: 20.12.2017
(73) Patentinhaber: Wolf, Roland, 70437 Stuttgart (DE)
(72) Erfinder: Wolf, Roland, 70437 Stuttgart (DE)
(74) Vertreter: Jeck, Anton
(86) Internationale Anmeldenummer: PCT/EP2016/052784
(87) Internationale Veröffentlichungsnummer: WO 2016/128435

(56) Entgegenhaltungen:
- EP-B1- 1 867 904
- JP-A- 2002 194 824
- JP-A- 2009 118 548

## Beschreibung

Die Erfindung betrifft eine wiederverwendbare Schutzvorrichtung gegen Wasserfortleitung in Kanälen und Gewerken gemäß dem Oberbegriff des Anspruchs 1.

In einer ersten am 31.05.2005 als EP 1686 670 B1 veröffentlichten Patentanmeldung ist eine Vorrichtung zum Abdichten von Zwischenräumen, Anheben oder Sichern von Werkstücken beschrieben.

In einer zweiten am 18.08.2006 als EP 1867 904 B1 veröffentlichten Patentanmeldung ist eine Vorrichtung zum gas- und druckwasserdichten Verschließen von Hohlräumen, zwischen Mauerdurchbrüchen sowie zwischen Kabelkanälen und zur Abdichtung von Zwischenräumen bei Stellwänden gemäß dem Oberbegriff des Anspruchs 1 beschrieben. Das darin beschrieben Abdichtkissen entspricht der EP1686 670 A1, wobei zusätzlich eine Weiterentwicklung für Mauerdurchführungen beschrieben ist. Ferner ist darin beschrieben ein Doppel-BigBag mit Brandabschottungsband, Pulver, Gas- oder Flüssigkeitsfüllung im BigBag-Inneren, zwei Reifenventilen und Dichtmodulen. Das verwendete Produktionsverfahren ist Verschweißen.

Nachteilig bei den beschriebenen Konzepten ist, dass sie für Dehnfugen in Gewerken und/oder Rohre und/oder Kabel und für Kanäle und Gebäudedurchführungen problematisch sind. Eine Abdichtung zwischen mehrfach belegten Kabeln und/oder Rohren ist nicht vorgesehen. Eine Ausrüstung zum Wasserfortleitungsschutz bei Leckage von Wassergemisch-Gefahrstoffen mit Verwendung in Tankanlagen ist entweder nur schwer oder gar nicht möglich.

Aus JP 2009 118548 A ist eine Abdichtungsstruktur für eine Öffnung eines Kanals bekannt, in dem eine Vielzahl von Kabeln gezogen sind, mit einem wasserexpansiven bandförmigen Element, das in Richtung seiner Dicke komprimierbar ist.

Aus JP 2002 194824 A ist ein wasserabdichtendes Werkzeug bekannt, mit einem äußeren Bereich aus einem Gummimaterial oder Harzmaterial und einem wasserquellenden Material in der Außenverkleidung.

Die Aufgabe der Erfindung besteht darin, aus Verbundfolie eine wiederverwendbare Schutzvorrichtung gegen Wasserfortleitung gemäß der im Oberbegriff des Anspruchs 1 genannten Art zu schaffen: Die wiederverwendbare Schutzvorrichtung mit Wechselwirkung bei Dehnfugen in Gewerken und/oder von mit Rohren und/oder Kabeln belegten Kanälen und Gebäudedurchführungen soll als Wasserfortleitungsschutz bei Leckage von Wassergemisch-Gefahrstoffen in Tankanlagen verwendbar sein, um Lager- und Transportbehälter, Deponien und/oder im Seebereich abzudichten.

Die abdichtende Wirkung wird durch zwei Funktionen erreicht. Die erste abdichtende Funktion hat das Abdichtkissen mit Ventil, welches unter Druck das Quellvliesdichtband und/oder Abdichtsterne in die Zwischenräume presst. Die zweite abdichtende Funktion kommt erst zum Tragen, wenn Wasser oder Chemikaliengemische pH2, pH12 und/oder ca. 80 % Benzin, Diesel, Kerosin oder Paraffinölgemisch das Quellvlies aktiviert. Bei Wassereintritt quillt das im PP-Vlies eingebettete Polymer an den nicht verpressten Abdichtstellen auf und schafft durch seine extrem dichte, gelförmige, in das PP-Vlies eingebettete Dichtschicht den Schutz gegen Wasserfortleitung während des Wassereintritts. Nach Trocknung der Gelschicht kann ein Überdruck bei Wärme von ≥ 0,3 bar durch das Quellvlies entweichen; bei neuem Wassereintritt quillt das Polymer wieder zuverlässig auf.

Die Schutzvorrichtung gegen Wasserfortleitung mit Wechselwirkung in Gewerken soll universell für ein breites Anwendungsspektrum geeignet sein und mittels hoher Kerbzäh-, Berstdruck-, Chemikalien- und Wasserdruckbeständigkeit mit einem geringen Eigengewicht ab 850 g/m² Anforderung erfüllen, mechanisch einen wirksamen, elastischen Flächenanpress- und/oder Wassersperrdruck aufbringen. Des Weiteren soll in der ersten Funktion mit der aufblasbaren von außen quellvliesbeschichteten bis 50 m langen Vorrichtung Dehnfugen in breiten von 2 cm bis 40 cm in einer Rekordzeit von etwa 10 min/Meter zuverlässig und wirtschaftlich abgedichtet werden.

In der zweiten Funktion sollen Personen und Sachschäden durch Wasserdurchdringung und Fortleitung mit Folgen von Eiszapfenbildung und Glättebildung zuverlässig vermieden werden.

Mit der gegen Wasserfortleitung abdichtenden Vakuum-Schutzvorrichtung mit innenliegenden Quellvlies-Dichtbändern in Abmessungen bis 10 m Breite mit bis 100 m Länge können Deponien, Tankanlagen gegen radioaktive und/oder explosive Stoffe, umweltbelastende Gefahrstoffe oder Leckagen durch Havarien zuverlässig abgedichtet werden. Die nach Anwendungsfall modifizierbare Schutzvorrichtung soll durch ihr geringes Flächengewicht 850, 1300 oder 1800 g/m² seine hohe Flexibilität, hoher Kerbzähigkeit mit ca. 40 N/cm² und hoher Berstdruckbeständigkeit mit ca. 9 bar und je nach Anforderung für eine Leckstellenüberwachung mit 2,4 GHZ Funk-Überwachungssystem oder gleichwertigem Kontrollsystem ausgestattet werden können. Mit Überwachung einzelner Grundelemente können betriebsbedingte Setzungen und/oder Leckstellen durch Chemikaliengemische pH2, pH12, Benzin, Diesel, Kerosin und Paraffinöl und auch Temperaturen bei Wechselbeanspruchung analysiert werden.

Die bekanntesten Dehnfugenabdichtsysteme, nämlich
- Fugenbänder aus Gummi oder Bitumen,
- Fugenbleche,
- quellfähige Fugeneinlagen aus Gummi,
- Injektionsschlauch,
- Injektionsverpressungen,
- PUR-Gel-Injektionsverpressungen
haben die bekannten Nachteile, dass die Abdichtungen unter Betriebsbedingungen Setzungen, Scherungen, Dehnungen im Temperaturbereich von -30 °C bis +60 °C unbeständig sind.

Ein weiterer Nachteil bei den Injektionsverpressungen ist ein sehr hoher Arbeitsaufwand für Injektionsbohrungen, die vor der Injektionsverpressung angebracht werden müssen, wodurch die Wirtschaftlichkeit des Systems sehr beeinträchtigt wird. Die vorteilhaften, endgültigen, dem jeweiligen Anwendungsbereich entsprechenden Modifikationen des vorgenannten Grundbauteils zeigen die nachfolgenden Beschreibungen.

Bei Verwendung von quellvliesumhüllten PE oder gleichwertigen Rundschnüren in Meterware kann bei Dehnfugen eine Sickerwasserdurchdringung vermieden werden. Mit den quellvliesumhüllten, flexiblen Brandschutzbändern in Kombination mit den quellvliesbeschichteten Abdichtkissen mit Ventil wird mit Kabeln und/oder Rohren belegten Gebäudeein- und -durchführungen und/oder Dehnfugen in zwei Funktionen eine absolute Wasser-Feuerabdichtung erreicht. Die erste abdichtende Funktion hat das Abdichtkissen mit Ventil gegen drückendes Wasser; die zweite abdichtende Funktion gegen Durchbrennen wird durch Aufplatzen des Abdichtkissens mit Ventil bei Wärmeeinwirkung bei einer Temperatur von > 100 °C mit anschließendem Aktivieren der flexiblen Brandschutzbänder erreicht.

Bei Verwendung als Wassersperrschutzvorrichtung zum wasserdichten Verschließen von Dehnfugen und/oder Bewegungsfugen ist das mit Luft befüllbare Abdichtsystem (Ventil), vorzugsweise vollflächig, mit einem wasserquellenden Quellvlies-Dichtband umschlossen, um eine völlige Wassersperre zu den Fugenflanken zu erzielen. Das Flachschlauchkissen wird für eine gleichmäßige und/oder wechselnde Fugenbreite je nach Typ, zum Beispiel 2 cm bis 8 cm, 2 cm bis 17 cm oder 2 cm bis 300 cm, längsförmig über Fugenversatzstellen, Bögen und/oder Ecken gelegt und bis zur Druckfüllung mit PE- (oder gleichwertigen) Rundschnurabschnitten gesichert.

Die Befüllung des Flachschlauchkissens erfolgt über ein metallenes Ventil, welches mit einer in das Flachschlauchkissen eingeschweißten Verlängerung verbunden ist. Beim Aufpumpen des Flachschlauchkissens mit Luft oder einer Flüssigkeit werden die Quellvliesdichtbänder in die Zwischenräume von Fugenversatzstellen gepresst. Die Demontage der wiederverwendbaren Vorrichtungen ist durch Evakuierung mittels Vakuumpumpe oder Ausbauen des Ventileinsatzes einfach möglich.

Zum Abdichten von Dehnfugen in Längen von > 23 m wird ein zweites und weitere Abdichtkissen etwa 0,25 m bis 1 m deckungsgleich mit dem ersten Abdichtkissen in die Dehnfuge eingelegt, so dass Dichtigkeit an der Überlappung erzielt wird.

Die Füllung der Flachschlauchkissen ist möglich, indem zuerst das längste Abdichtkissen und anschließend das kürzeste Abdichtkissen bis zum Soll-Fülldruck befüllt wird.

Zum Abdichten von Dehnfugen in Bogenbrücken werden Abdichtkissen in Längen des Bogenradius eingesetzt. Alle Abdichtkissen werden jeweils an den Enden deckungsgleich und etwa 0,25 m in die Dehnfugen eingelegt und mit einer PE-Rundschnur bis zur Druckfüllung gesichert.

Zum Abdichten von Zwischenräumen im Durchmesser von 50 mm bis 250 mm, beispielsweise bei mehrfach belegten Kanälen oder Gebäudeeinführungen, und Innendurchmesser von ≤ 150 mm wird ein Quellvlies-Abdichtstern zwischen die zwei, drei oder vier Kabel und/oder Rohre eingelegt. Durch Aufpumpen mit Luft wird je nach Anwendungsbereich eine Abdichtungsvorrichtung mit Wechselwirkung erzielt, so dass bei Kabelschutzrohren der Überdruck "Luft durch Wärme im Kunststoffrohr" entweichen kann und vom Rohrende eine Wasserdruckdichtigkeit bis 5 m bei einer Wassersäule von - 0,5 bar erzielt wird.

Zum Abdichten gegen drückendes Wasser und Durchbrennen von mit Kabeln und/oder Rohren belegten Kanälen, Gebäudeein- und -durchführungen werden die Zwischenräume hinter dem mit Abdichtkissen (Ventil) eingebauten Wasserschutz mit quellvliesumhüllten, flexiblen Brandschutzbändern ausgefüllt. Die Dichtigkeit gegen Durchbrennen wird durch Aufplatzen des Abdichtkissens mit Ventil bei einer Wärmeeinwirkung von > 100 °C und Aktivieren der Brandschutzbänder durch Aufschäumen erreicht.

Bei Verwendung der Schutzvorrichtungen gegen Wasserfortleitung bei Leckagen vor und/oder nach Havarien, Schutz vor umweltbelastenden Stoffen oder Wassereintritt in Lager- und/oder Transportbehälter ist das vakuumevakuierte Abdichtkissen (Ventil) vollflächig dem jeweiligen Anwendungsbereich entsprechender Modifikation mit mindestens einer Lage wasserquellendem Quellvlies umschlossen, um eine völlige Abdichtung zu erzielen.

Die Wassergemisch-Schutzvorrichtungen als Grundprofilkörper sind in einer Modifikation als endlose Meterware gedacht, die einfach aneinandergereiht und/oder übereinander gelegt durch besondere Ausformungen und/oder Bearbeitungen in Verbindung mit entsprechenden Halterungen reversibel angebracht werden, was bei einer Wiederverwendung erwünscht ist oder wobei die Abdichtkissen (Ventil) dauerhaft beim Bahngasschweißen so miteinander verbunden sind, dass Druckänderungen mit einem 2,4-GHZ-Funk-Überwachungssystem, an dem ein Ventil angebracht ist, zu lokalisieren sind.

Die Wasserschutzvorrichtung in einer weiteren Modifikation zum Schutz vor Wassereintritt in Lager-, Transport- und/oder Sonderbauteilbehälter, die sich je nach Anwendungsfall aus einem Grundprofilkörper und/oder mehrere Grundprofilkörper zusammenhängend als Matte durch entsprechende Halterungen mittels Seilen miteinander verbunden sind. Vorstellen kann man sich, dass die Grundkörper mittels Nägeln, Schrauben, Magnetplatten oder auf der Unterseite mit einer selbstklebenden Masse aus Butyl-Kautschuk oder modifiziertem Bitumen zur schnellen Befestigung angebracht sind.

Die Erfindung wird nun an Hand von Ausführungsbeispielen näher erläutert. Es zeigen:
Fig. 1 eine perspektivische Ansicht einer wiederverwendbaren Schutzvorrichtung gegen Wasserfortleitung als Abdichtkissen mit Reifenventil zum Befüllen und Evakuieren in Breiten von 100 mm bis 450 mm und Längen von 150 mm bis 23 m, das im Bahngasschweißen und Heißsiegelschweißverfahren rundum mit einer 9 bar berstdruckbeständigen Aluminium-Verbundfolie und Reifenventil verschweißt und mit Quellvliesdichtband umhüllt ist;
Fig. 2 einen Querschnitt einer der Ansicht der Fig. 1 ähnlichen Schutzvorrichtung, die zur kreisförmigen Verwendung in mit Kabeln und/oder Röhren belegten Kanälen und/oder Gewerken zur Kabel- und/oder Rohr-Zwischenraumabdichtung mit Wechselwirkung bei Wärme und Wasser vorgesehen ist, bei der ein Quellvlies-Abdichtstern eingebracht ist;
Fig. 3 eine perspektivische Ansicht der in Fig. 2 gezeigten Kabel- und/oder Rohr-Zwischenraumabdichtung, hergestellt aus zwei übereinander gelegten Quellvlies-Abdichtbändern in der Längsrichtung als Quellvlies-Abdichtstern mit mindestens einer Längsverschweißung;
Fig. 4 eine perspektivische Ansicht der in Fig. 2 und 3 gezeigten Zwischenraumabdichtung mit Wechselwirkung mit zwei übereinandergelegten Quellvlies-Abdichtbändern, zweimal vernäht oder verschweißt in der Längs- und einmal in der Querrichtung als Quellvlies-Einschiebe-Abdichtstern;
Fig. 5 eine perspektivische Ansicht einer der Fig. 1 ähnlichen Wasserschutzvorrichtung in Gewerken, Brücken, Gebäuden und/oder Übergängen bei einem bogenförmigen Fugenverlauf und/oder Dehnfugen mit Längen > 23 m, bei dem mehrere Abdichtkissen (Ventil) versetzt bzw. übereinandergelegt eingebracht sind;
Fig. 6 eine perspektivische Ansicht einer der Fig. 1 und 5 ähnlichen Wasserschutzvorrichtung in Gewerken, in dem Abdichtkissen (Ventil) zwischen den Fugenflanken eingebracht sind;
Fig. 7 einen Querschnitt der Figuren 1, 5 und 6 mit der Ausgestaltung, dass zwei Abdichtkissen (Ventil) überlappt im Bereich von Fugenversatzstellen über Betonreste eingebracht sind;
Fig. 8 einen Querschnitt der Figuren 1, 5, 6 und 7 mit der Ausgestaltung, dass ein oder zwei Abdichtkissen (Ventil) im Bereich von Fugenversatzstellen bzw. Ausbruchsstellen eingebracht ist bzw. sind;
Fig. 9 einen Querschnitt der Figuren 1, 5, 6, 7 und 8 mit der Ausgestalung, dass in Gewerken zwei Abdichtkissen (Ventil) in den Dehnfugen übereinander gelagert eingebracht sind;
Fig. 10 einen Querschnitt der Figuren 1 , 5, 6, 7 und 9 mit der Ausgestaltung, dass bei einer Dehnfugenbreite von 300 mm ein Abdichtkissen (Ventil) eingebracht ist;
Fig. 11 einen Querschnitt der Fig. 1 mit der Ausgestaltung, dass in Gewerken das Abdichtkissen (Ventil) an einem Stück über Ecken eingebracht ist;
Fig. 12 eine perspektivische Ansicht eines aufgeschnittenen, wiederverwendbaren Grundelements der Chemikaliengemisch-Schutzvorrichtung mit innenliegenden, mindestens eine Lage enthaltenden Quellvlies-Dichtbändern gegen Wasserdurchdringung als Vakuum-Abdichtkissen (Ventil), das als Meterware in Breiten bis 12 m und Längen bis 100 m im Bahngasschweißen die übereinander gelagerten Grundelemente rundum mit einer Aluminiumverbundfolie mit einer Kerbzähigkeit von 40 N/cm² mit Halterung zug- und reißfest umhüllt;
Fig. 13 eine perspektivische Ansicht einer der Fig. 12 ähnlichen Wasserschutzvorrichtung in Gewerken, bei der das Grundelement der Abdichtkissen (Ventil) ohne Halterungen ausgebildet ist;
Fig. 14 perspektivische Ansichten von den Figuren 12 und 13 ähnlichen Wasserschutzvorrichtungen in Gewerken, in dem die Grundelemente aneinandergereiht und im Bahngasschweißen die Grundelemente mit einem Verbundfolienstreifen miteinander zug- und reißfest verbunden sind;
Fig. 18 eine perspektivische Ansicht einer Wasser-Feuer-Durchdringschutzvorrichtung, bestehend aus einem quellvliesumhüllten, flexiblen Brandschutzband, das einzeln eine Sickerwasserdurchdringung zum Brandschutzband verhindert, oder in Kombination mit dem Abdichtkissen mit Ventil, das sich als Wassersperre bis 10 m Wassersäule in Dehnfugen vor dem quellvliesumhüllten Brandschutzband befindet; im Brandfalle > 100 °C platzt das Abdichtkissen mit Ventil mit anschließendem Aufquellen des Brandschutzbandes, so dass ein Feuer-Durchbrennschutz erreicht wird;
Fig. 19 eine perspektivische Ansicht einer der Fig. 18 ähnlichen Wasser-Feuer-Durchdringschutzvorrichtung, die kreisförmig um Kabel und Röhre im belegten und mit Abdichtkissen (Ventil) abgedichteten Kabelkanälen-, Rohren-, Gebäudeein- und -durchführungen gewickelt ist.

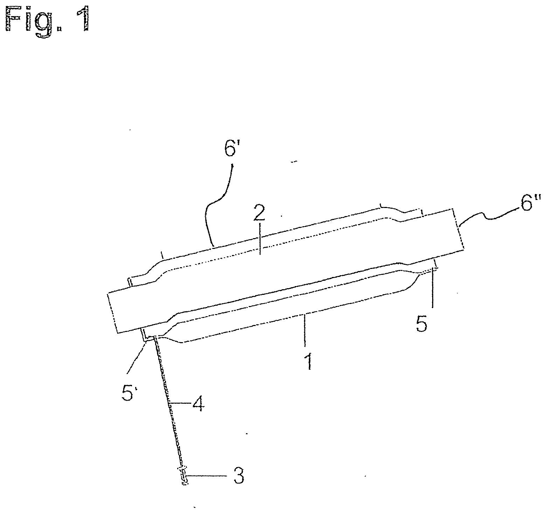

Die Fig. 1 zeigt die Vorrichtung, bestehend aus einem beidseitig außen mit Quellvlies-Dichtband 2 beschichteten Flachschlauchkissen 1 mit einem Druckluftventil 3, welches mit einer metallenen, kunststoffbeschichteten Ventilverlängerung 4 verbunden ist, die sich an einer der 150 mm bis 23 m langen Längsseite 6' oder an den 10 cm - 60 cm großen Stirn- bzw. Breitseiten 6" des Flachschlauchkissens 1 befindet und die bei einlagiger Anwendung zur optimalen Druckverteilung dient. Die Ausbildung als Flachschlauchkissen wird durch Herstellung von druckdichten Verschlüssen 5 in Längsrichtung 6' und an den beiden Enden der Verbundfolien-Oberflächen erzielt.

Je nach Anwendungsbereich wird das Flachschlauchkissen 1 kreisförmig zwischen einem Mauerdurchbruch bzw. Kabelkanal 7 und einem Medienrohr 8 oder Mehrfach-Medienrohr 7 bzw. Mehrfach-Kabel 8 eingelegt. Durch Befüllen und/oder Evakuierung der Vorrichtung über das Druckluftventil 3 mit metallener, kunststoffbeschichteter Ventilverlängerung 4 mit gasförmigen oder pulverisierten oder flüssigen Füllmedien 3 werden die Hohlräume mit dem Quellvlies-Dichtband 2 ausgefüllt. Nach Ablassen der Befüllung aus dem Flachschlauchkissen 1 ist eine einfache Demontage möglich und das Flachschlauchkissen 1 kann wieder verwendet werden.

Die Fig. 1 zeigt zwei übereinander gelegte Flächschlauchkissen 1. Das Quellvlies-Dichtband 2 ist für eine Außenbeschichtung bestimmt. Das Flachschlauchkissen 1 ist als eine kerbzäh- und berstdruckbeständige Verbundfolie ausgebildet. Der druckdichte Verschluss 5 ist mittels Bahngasschweißverfahren oder Heißsiegelschweißverfahren hergestellt.

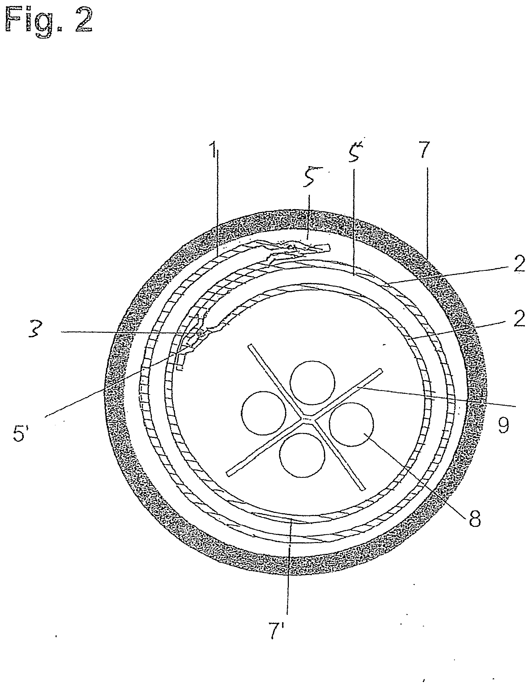

Die Fig. 2 zeigt einen Querschnitt einer der der Fig. 1 ähnlichen Schutzvorrichtung, die zur einlagigen, kreisförmigen Verwendung in mit Kabeln und/oder Rohren 8 belegten Kanälen 7, Rohren 8 und/oder Gebäudeein- oder Durchführungen 7 mit einer Quellvlies-Zwischenraumabdichtung 2 mit Wechselwirkung bei Wärme und Wasser des Abdichtkissens 1 einen Quellvlies-Abdichtstern einmal längs hochfrequenzverschweißt oder vernäht oder einen Quellvlies-Einschiebe-Abdichtstern 10, der aus zwei Längsnähten und einer Quernaht und/oder Hochfrequenzverschweißung besteht.

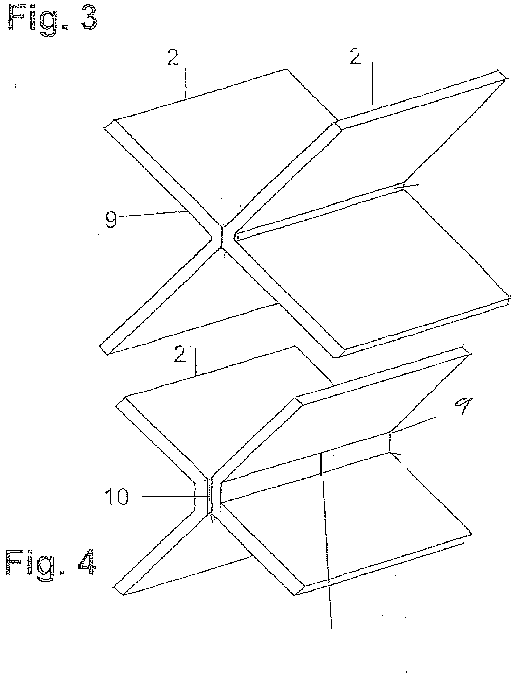

Die Fig. 3 zeigt eine perspektivische Ansicht der in Fig. 2 gezeigten Vierkammer-Quellvlies-Abdichtstern-9-Zwischenraumabdichtung mit Wechselwirkung bei Wärme und Wasser, hergestellt aus mindestens zwei übereinander gelegten Quellvlies-Dichtbändern 2, die mittig in Längsrichtung hochfrequenzverschweißt oder vernäht sind.

Die Fig. 4 zeigt eine ähnliche Vorrichtung wie in Fig. 3, bei der als Vierkammer-Quellvlies-Einschiebe-Abdichtstern 9 in Längsrichtung zwei und mittig eine Hochfrequenzschweißung und/oder Naht angebracht sein können.

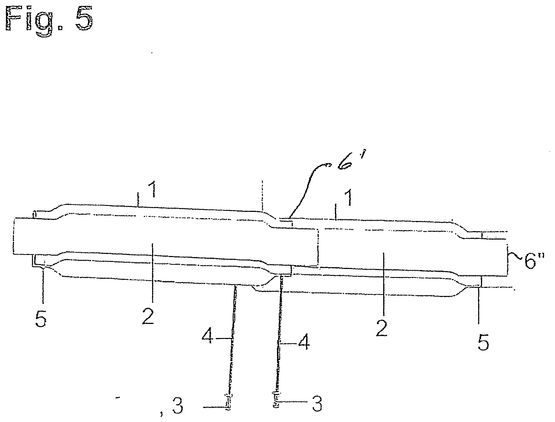

Die Fig. 5 zeigt eine der Fig. 1 ähnliche perspektivische Ansicht bei längsförmigen oder bogenförmigen Dehnfugen mit Anwendung bis über 100 m mit der Ausbildung, dass das Flachschlauchkissen 1 oder mehrere Flachschlauchkissen vorteilhaft versetzt bzw. übereinander eingebracht ist bzw. sind, bei der die Flachschlauchkissen 1 aus einer kerbzähen, berstdruckbeständigen Verbundfolie in Längsrichtung gefaltet und im Bahngasschweißen auch in Längen bis über 300 m und Breiten bis 60 cm als Flachschlauchkissen 1 herstellbar sind.

Durch Befüllen der Flachschlauchkissen 1 mit gasförmigen Füllmedien über das Druckluftventil 3 werden Hohlräume ausgefüllt; für Überwachungen von Fugenbewegungen, Temperaturänderungen und Leckstellen ist ein einfaches 2,4-GHZ-Überwachungsmesssystem adaptierbar. Nach Evakuierung der Befüllung über das Reifenventil 3 aus dem Flachschlauchkissen 1 sind eine Demontage für Inspektionsarbeiten und das Wiederverwenden des Flachschlauchkissens 1 möglich.

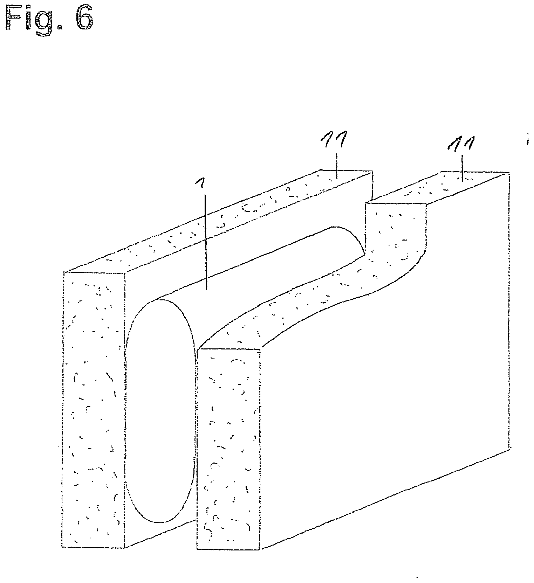

Die Fig. 6 zeigt eine perspektivische Ansicht der in den Figuren 1 und 5 gezeigten Wasserschutzvorrichtung in Dehnfugen bzw. Gewerken, bei denen das Flachschlauchkissen 1 durch Befüllen die Hohlräume zwischen den Fugenflanken 11 ausfüllt.

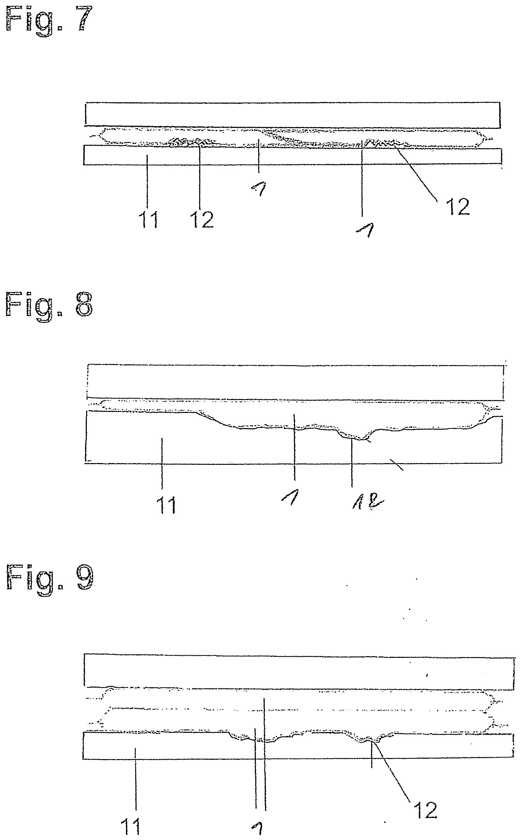

Die Fig. 7 zeigt einen Querschnitt der Figuren 1, 5 und 6 mit der Ausgestaltung, dass das Flachschlauchkissen 1 überlappt in einer Dehnfuge von Gewerken 11 über Fugenversatzstellen 12 aus Betonresten eingebracht sein kann.

Die Fig. 8 zeigt einen ähnlichen Querschnitt wie in den Figuren 1, 5, 6 und 7 mit der Ausgestaltung, dass das Flachschlauchkissen 1 Fugenversatzstellen 12 von bis zu 6 cm auf einer Länge von 1 Meter mit Betonresten in der Dehnfuge 11 nach Befüllung zuverlässig gegen Wasserdurchdringung abdichten kann.

Die Fig. 9 zeigt einen der Fig. 8 ähnlichen Querschnitt mit der Ausgestaltung, dass vorteilhaft zwei Abdichtkissen 1 übereinander gelagert, die Dehnfugen 11 mit einem größer als die zulässigen Flachschlauchkissenabdichtbreite 1 und Fugenversatzstellen 12 gegen Wasserdurchdringung abdichten können.

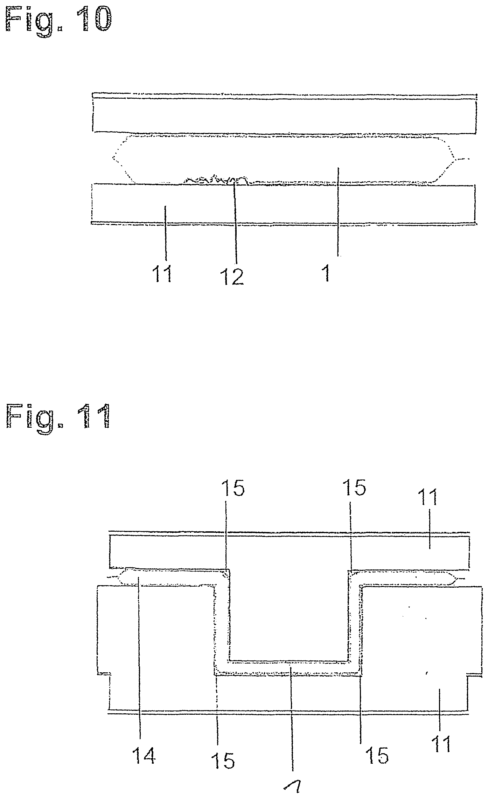

Die Fig. 10 zeigt einen der Fig. 9 ähnlichen Querschnitt mit der Ausgestaltung, dass das Flachschlauchkissen 1 in einer Flachschlauchkissen-Sonderbreite dargestellt ist.

Die Fig. 11 zeigt einen den Figuren 6, 7, 8 und 10 ähnlichen Querschnitt mit der Ausgestaltung, dass das Flachschlauchkissen 1 an einem Teilstück in längsförmige 11 und rechteckige 14 Dehnfugen eingebracht sein kann, wobei die Eckbereiche mit Eck-, T- und/oder Kreuzfugen-Rundmodulen 15 ausgestattet sind, so dass eine Abdichtung gegen Wasserfortleitung erreicht wird.

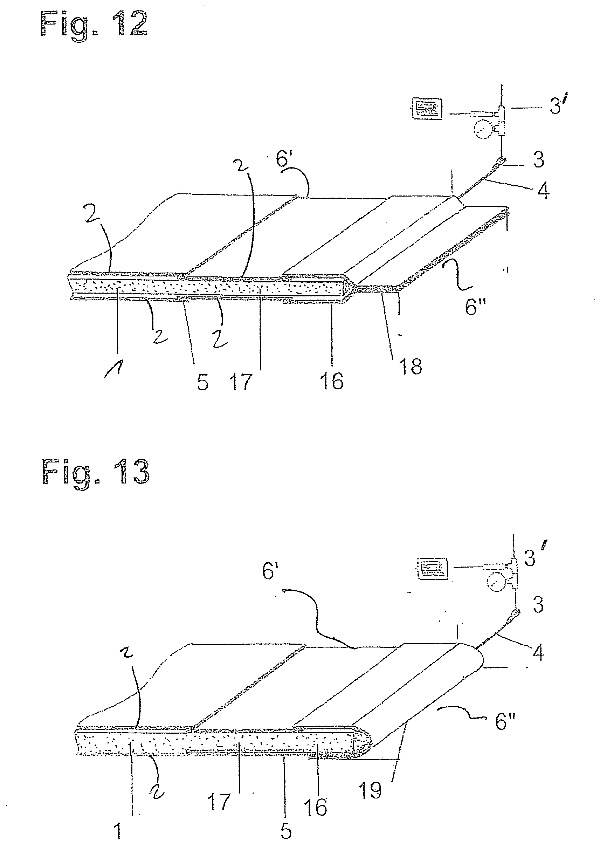

Die Fig. 12 zeigt eine perspektivische Querschnittsansicht eines Vakuum-Flachschlauchkissen-Ventil- Grundelements 16 mit Quellvlies-Dichtband innenliegend, mit mindestens einer Lage 17 einseitig mit der Verbundfolie 1 verklebt, mit einem Vakuum-Druckluftventil 3, welches mit einer metallenen, kunststoffbeschichteten Ventilverlängerung 4 mit der kerbzähen- und berstdruckbeständigen Verbundfolie 1 im Heißsiegelschweißverfahren verschlossen ist. Das Flachschlauchkissen-Ventil-Grundelement 16 wird maßgerecht rundum im Bahngasschweißverfahren in Lieferbreiten 6" von bis 12 m und Längen 6' von bis 100 m mit aneinander liegendem Quellvlies-Dichtband 17 und überlappender Verbundfolie 1 im Bahngasschweißverfahren zug- und druckfest hergestellt. Mehrere Grundelemente können über eine lösbare Grundprofilhalterung 18 zur Aufnahme von Ösen, Seilen, Schrauben, Nägeln und dergl. miteinander zug- und druckfest verbunden werden. Für Temperatur- und Dichtigkeitsüberwachungszwecke einzelner Grundelemente 16 kann nach Evakuierung der Restluft an jedem Reifenventil 3 mit einem 2,4-GHZ- oder gleichwertigen Überwachungsmesssystem Vakuum angebracht werden.

Die Fig. 13 zeigt eine der Fig. 12 ähnliche, perspektivische Ansicht eines Flachschlauchkisssens mit Ventil-Grundelement 16 ohne Grundprofilhalterung 19, wobei je nach Anwendungsfalle die Vakuum-Flachschlauchkissen-Ventil-Grundelemente in den Randbereichen versetzt übereinander oder nebeneinander gelagert im Bahngasschweißverfahren 5 als Einzel-Grundelement 16 nicht lösbar miteinander verbunden sind, jedes Grundelement jedoch für sich über das Reifenventil 3 über-wacht wird.

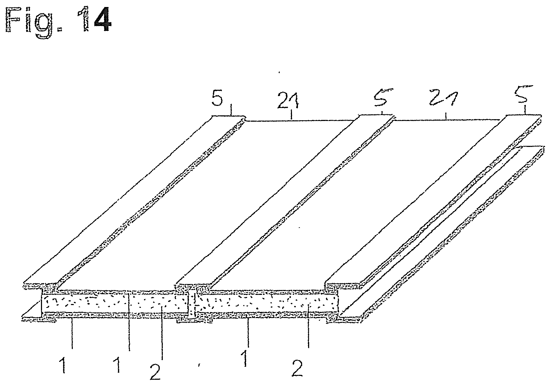

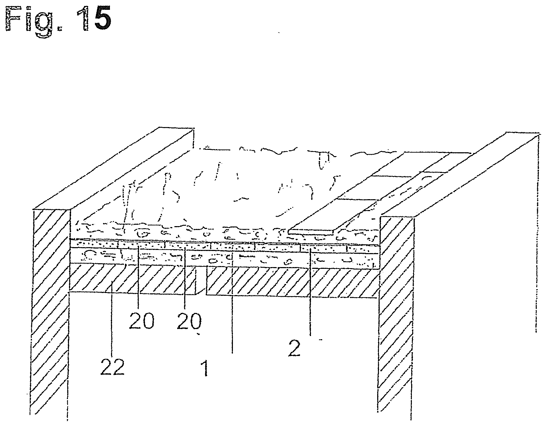

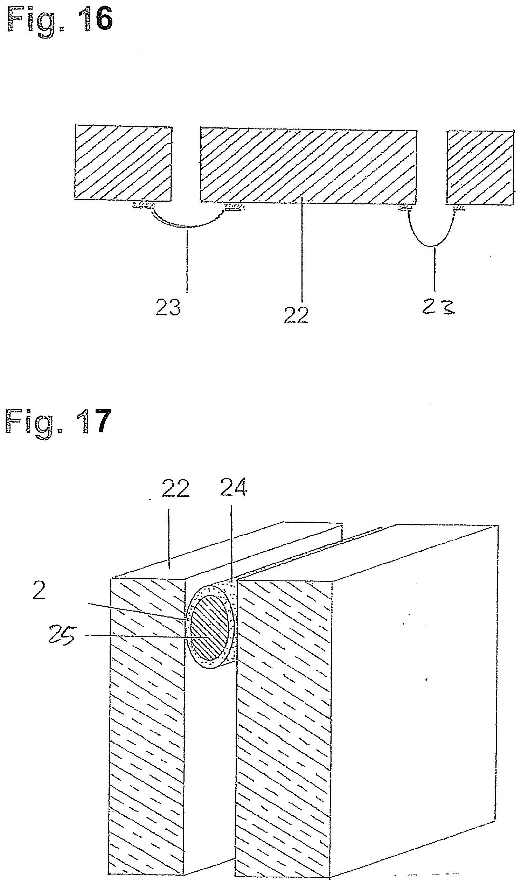

Die Fig. 14 zeigt eine perspektivische Ansicht eines des den Figuren 12 und 13 ähnlichen Vakuum-Flachschlauchkissens mit Ventil 16 in Gewerken mit der Ausgestaltung, dass je nach Anwendungsfall das Quellvlies-Dichtband 2 ein- oder mehrlagig im Grundkörperprofil 16 einseitig angeklebt ist, wobei die Grundkörperprofile 16, nebeneinander angeordnet 21 , mit Verbundfolienstreifen 1 im Bahngasschweißverfahren miteinander verbunden werden.

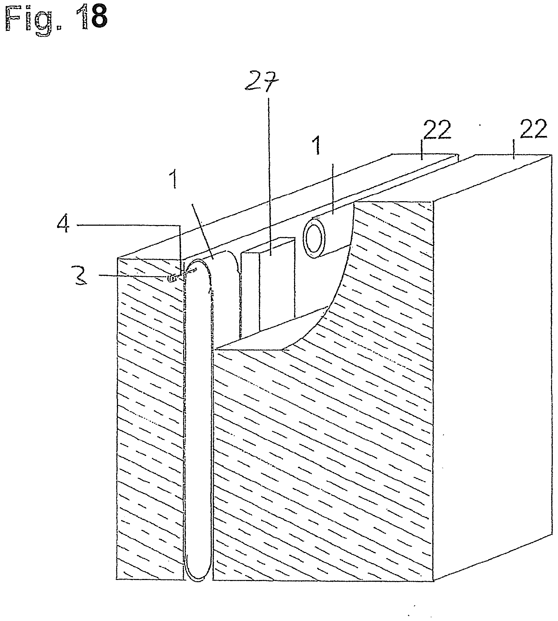

Die Fig. 18 zeigt eine perspektivische Ansicht als Was-ser-Feuer-Durchdring-Schutzvorrichtung 27 in Dehnfugen 22 in Kombination mit einem Abdichtkissen mit Ventil 1 . In der Kombination dient das Abdichtkissen mit Ventil als Wassersperre bis 10 m Wassersäule mit den Eigenschaften, dass im Leckagefall durch Brand mit einem am Reifenventil 3 angebrachten 2,4-GHZ-Überwachungsmesssystem ortsaufgelöste Temperatur- und Druckänderungen an eine zentrale Leitstelle übermittelt werden können, dass das Abdichtkissen mit Ventil 3 bei > 100 °C aufplatzt und das quellvliesumhüllte flexible Brandschutzband 27 durch Aufquellen der Brandschutzmasse des Bands 28 ein Feuer-Durchdringschutz erreicht wird.

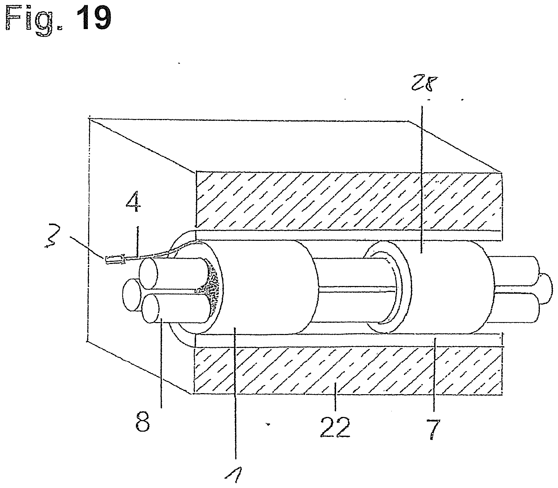

Die Fig. 19 zeigt eine der Fig. 18 ähnliche perspektivische Ansicht mit der Ausgestaltung, dass die Wasser-Feuer-Durchdring-Schutzvorrichtung 27 in kreisförmiger Anwendung 29 in Kanälen 7 Anwendung findet. Das Abdichtkissen mit Ventil 1 zeigt einen ähnlichen Querschnitt der Schutzvorrichtung der Fig. 2 bei kreisförmiger Verwendung in mit Kabeln und/oder Rohren 8 und/oder Gebäudeein- oder - durchführungen. Zusätzlich zu der in Fig. 2 gezeigten Wasserschutzvorrichtung befindet sich unmittelbar nach dem Abdichtkissen 1 mit Ventil eine Feuer-Durchdring-Schutzvorrichtung 28, die kreisförmig in mindestens einer Lage um die in Kanälen belegten Kabel und/oder Rohre 8 eingebracht ist.

Von Bedeutung ist noch, dass das Flachschlauchkissen mit Berstdruckbeständigkeit bis 9 bar, Kerbzähigkeit bis 40 N/cm², Chemikalienbeständigkeit gegen pH2, pH12, Benzin, Diesel, Kerosin, Paraffinöl und Temperaturbeständigkeit von -60 °C bis +70 °C hergestellt ist.

### Bezugszeichenliste

- 1: Flachschlauchkissen
- 2: Quellvlies-Dichtband
- 3: Reifenventil zur Befüllung oder Evakuierung
- 3': Überwachungsmesssystem Vakuum, Druck und Temperatur
- 4: Ventilverlängerung, metallen, kunststoffbeschichtet
- 5: druckdichter Verschluss
- 6': Abdichtkissen, Längsseite-/Richtung Kissenlänge
- 6": Abdichtkissen-Querseite (Stirnseite Kissenbreite)
- 7: Kabelkanal, Rohr, Gebäudeein- und/oder -durchführung
- 8: Kabel oder Rohr
- 9: Vierkammer-Quellvlies-Abdichtstern hochfrequenzverschweißt oder genäht
- 10: Hochfrequenzschweißung
- 11: Fugenflanke
- 12: Fugenversatzstelle
- 14: Dehnfuge mit rechteckigem Dehnfugenverlauf
- 15: Rundmodul für Eck-, T- und/oder Kreuzfuge
- 16: Grundelement des Vakuum-Flachschlauchkissens (Ventils)
- 17: Quellvlies-Dichtband, innenliegend mit mindestens einer Lage
- 18: lösbare Grundprofilhalterung zur Aufnahme von Ösen, Seilen, Schrauben
- 19: Quellvlies-Dichtband ohne lösbare Grundprofilhalterung
- 20: Wassergemisch-Schutzvorrichtung
- 21: Quellvlies-Dichtband, mit elastischen Klebstoffen an Mauer-werken und/oder Metall-/Kunststoffbehältern anklebbar
- 22: Gewerke
- 23: Wasserablaufrinne unterhalb oder oberhalb der Fuge
- 24: Quellvlies-Rundschnur, Wassersperrschicht
- 25: PE-Rundschnur oder Brandschutzschnur
- 27: Wasser-Feuer-Durchdring-Schutzvorrichtung/-band in Dehnfugen oder Brandschutzband, flexibel
- 28: Brandschutzband, flexibel

## Patentansprüche

1. Vorrichtung zum Schutz vor Wassereintritt und Feuerdurchdringung in Zwischenräumen und in Hohlräumen durch Dehnfugen (11, 12, 14) in Gewerken, Kabelkanälen (7, 8), Gebäudedurchführungen (7, 8), die mit Kabeln und/oder Rohren belegt sind und je nach Anforderung als Brandschutz- bzw. Leckage-Schutzvorrichtungen (20), Deponien, Tankanlagen, Transport- und/oder Sicherheitsbehältern im Seebereich dienen,
**dadurch gekennzeichnet,**
**dass** die Vorrichtung aus einem in der Länge (6') und Breite (6") festgelegten Flachschlauchkissen (1) besteht, das an den Außenseiten mit einem Quellvlies-Dichtband (2) ausgerüstet ist, und dass das Leckage- bzw. Schutz-Flachschlauchkissen (1) im Innern mit mindestens einem Quellvlies-Dichtband (17) versehen ist, das an der Längsseite (6') und der Querseite (6") zugfeste Verschlüsse (18) aufweist und über mindestens ein kunststoffbeschichtetes, metallenes Druckluftventil (3) mit Ventilverlängerung (4) befüllt oder evakuiert wird und je nach Anforderung mit einem Funk-Überwachungs- bzw. Kontrollsystem (3') ausgestattet werden kann.

2. Vorrichtung nach Anspruch 1,
**dadurch gekennzeichnet,**
**dass** eine einlagige, kreisförmige oder längsförmige und/oder längsförmige, zweilagige Anordnung des Flachschlauchkissens (1) vorgesehen ist, wobei das Ventil (3) mittels einer Ventilverlängerung (4) für eine Summenleckrate von 5,5 mbar/s im Heißsiegelschweißverfahren mit dem Flachschlauchkissen (1) verbunden ist.

3. Vorrichtung nach Anspruch 1 oder 2,
**dadurch gekennzeichnet,**
**dass** das Flachschlauchkissen (1) im Anwendungsbereich als Einzelelement horizontal, vertikal, voll- oder halbkreisförmig im Rohrumfang oder der Dehnfugensegmentlänge angeordnet ist, wobei sich das Druckluftventil (3) mindestens an einem Ende des Flachschlauchkissens (1) befindet und durch die metallene Verlängerung (4) ein in alle Richtungen biegsames Sonderventil (3) hergestellt werden kann.

4. Vorrichtung nach den Ansprüchen 1 bis 3,
**dadurch gekennzeichnet,**
**dass** sie innenliegend oder außenliegend in Längs- oder Querrichtung zusätzlich ein elastisches, nicht dauerhaft verklebendes, nach Wasserkontakten schnell quellendes Quellvlies-Dichtband (2) mit einem Flächengewicht von 480 g/m² aufweist.

5. Vorrichtung nach einem der Ansprüche 1 und 4,
**dadurch gekennzeichnet,**
**dass** beim Abdichten von mit Kabeln (8) und/oder Kabelrohren (8) durchzogenen Kabelkanalrohren (7) im Bereich der Berührungsstellen von Kabelkanalrohren (8) und/oder Kabelkanalrohren (7) eine Umwicklung aus einem Quellvlies-Dichtband (2) mit bzw. ohne Trennfolie eingesetzt ist und sich im Zwickel Füllelemente oder Quellvlies-Abdichtsterne (9) befinden, die aus Dichtbandmaterial (2) hergestellt sind.

6. Vorrichtung nach Anspruch 5,
**dadurch gekennzeichnet,**
**dass** die Quellvlies-Abdichtsterne zum Einschieben zwischen zwei und mehr Kabeln aus zwei übereinander gelegten Quellvlies-Abdichtbändern (2) mit zwei Längsnähten und einer Quernaht (10) und/oder zwei übereinander gelegten Quellvlies-Abdichtbändern, mit einer ≥ 5mm breiten Längsschweißnaht (9) verbunden, hergestellt ist.

7. Vorrichtung nach einem der Ansprüche 1 bis 6,
**dadurch gekennzeichnet,**
**dass** das Flachschlauchkissen (1) in Kombination mit einer Wasser-Feuer-Durchdringungs-Schutzvorrichtung bei längsförmiger Anwendung in Dehnfugen (27) oder kreisförmiger Anwendung in mit Kabeln und/oder Rohren (8) belegten Kanälen (7) als druckwasserdichte Sperrschicht ausgestattet ist, die mit einem möglichen Überwachungsmesssystem (3) und einem mit Quellvlies-Dichtband (2) im Hochfrequenzschweißverfahren (9) umhüllten, flexiblen Brandschutzband (28) als Feuerdurchdringungsschutz (27) hergestellt ist.

8. Vorrichtung nach Anspruch 1,
**dadurch gekennzeichnet,**
**dass** das Flachschlauchkissen (1) mit gasförmigen, pulverisierten oder flüssigen Medien, Quellvlies-Dichtbändern (2, 17) und/oder Magnet- oder Bleibändern gefüllt ist.

9. Vorrichtung nach Anspruch 1, 2, 3 und 4
**dadurch gekennzeichnet,**
**dass** das Flachschlauchkissen (1) in der Länge dem Umfang des Kanals (7) und in der Länge der Dehnfuge (6') angepasst sowie und in den Breiten von 135, 285 oder 420 mm (6") hergestellt ist.

10. Vorrichtung nach Anspruch 1, 2 und 8,
**dadurch gekennzeichnet,**
**dass** die Wasserleckage- und/oder Schutz-Flachschlauchkissenvorrichtung (1, 16, 20, 21) aus einem oder mehreren übereinander oder nebeneinander gelegten Grundelemente/n als Endlos-Meterware in Breiten von bis 12 m und in Längen von bis 100 m im Bahngasschweißen miteinander rundum zug- und druckfest hergestellt ist und einseitig mit einem Quellvlies-Dichtband (2) mittels elastischem Klebstoff verbunden ist.

11. Vorrichtung nach Anspruch 1, 2 und 3,
**dadurch gekennzeichnet,**
**dass** die Wasserleckage-Schutzvorrichtung bzw. das Flachschlauchkissen (16, 20, 21) vorzugsweise im Inneren mit einer oder mehreren miteinander verklebten Quellvliesdichtbandschichten (17) von 480 g/m² hergestellt ist.

12. Vorrichtung nach einem der Ansprüche 1, 4, 5, 7, 10 und 11,
**dadurch gekennzeichnet,**
**dass** das Quellvliesdichtband (2, 17) von 480 g/m² aus einem mechanisch verfestigtem PP-Vlies mit wasserabsorbierendem, schnell wasserquellenden Polymer hergestellt ist.

13. Vorrichtung nach einem der Ansprüche 1, 2, 3, 7, 8, 9, 10 und 11,
**dadurch gekennzeichnet,**
**dass** das Flachschlauchkissen (1, 6', 6", 16, 20, 21) aus einem gefalteten Band oder Schlauch hergestellt ist, das bzw. der je nach dem Anwendungsbereich aus Thermoplast, Elastomeren und/oder schwer entflammbaren Thermoplast-Elastomer-Gemischen besteht, wobei diese Stoffe metallene und/oder metallfreie Einlagen aufweisen.

14. Vorrichtung nach einem der Ansprüche 1, 2, 3, 7 bis 11 und 13,
**dadurch gekennzeichnet,**
**dass** das Band (1"') des Flachschlauchkissens (1, 6', 6", 16, 20, 21) vorzugsweise mindestens aus einer fünflagigen Thermoplast-Verbundfolie (1'") mit dem Aufbau
| | | | |
|---|---|---|---|
| - | 150-250 µm PE | - | 150-250 µm PE |
| - | 15-30 µm PET | - | 15-30 µm PET |
| - | 9-23 µm ALU | - | 9-23 µm BLEI |
| - | 15-30 µm PET | - | 15-30 µm PET |
| - | 150-250 µm PE | - | 150-250 µm PE |
hergestellt ist.

15. Vorrichtung nach einem der Ansprüche 1, 2, 3, 7, 8, 9, 13, und 14,
**dadurch gekennzeichnet,**
**dass** das Flachschlauchkissen eine Summenleckrate von
L = ..... 5,5 ≤ 6,2 x 10-8 mbarl/s, entspricht 2,7 mbarl/Jahr,
mit der gelieferten Ventilabschlusskappe aufweist.

## Claims

1. A device for protecting against water intrusion and fire penetration in interstices and voids through expansion joints (11, 12, 14) in building walls, cable conduits (7, 8), building lead-throughs (7, 8), which are laid with cables and/or pipes and depending on requirements serve as fire protection or leak protection devices (20), disposal sites, tank farms, and transportation and/or security containers in the seafaring field,
**characterized in that**
the device consists of a lay flat hose cushion (1) of fixed length (6') and width (6"), which is equipped on the outsides with a swelling nonwoven sealing tape (2), and that the leakage or protective lay flat hose cushion (1) is provided in the interior with at least one swelling nonwoven sealing tape (17), which has tension-proof closures (18) on its long side (6') and transverse side (6") and is filled or evacuated via at least one plastic-coated metal compressed-air valve (3) with a valve extension (4), and which depending on requirements can be equipped with a radio monitoring and control system (3').

2. The device of claim 1,
**characterized in that**
a circular or elongated single-ply and/or elongated double-ply arrangement of the lay flat hose cushion (1) is provided, and the valve (3) is connected to the lay flat hose cushion (1) by means of a valve extension (4) for a total leakage rate of 5.5 mbar/s by the hot-sealing method.

3. The device of claim 1 or 2,
**characterized in that**
in the region where it is to be used, the lay flat hose cushion (1) is located as a single element horizontally, vertically, and in the form of a circle or semicircle in the pipe circumference or lengthwise in the expansion joint segment, and the compressed-air valve (3) is located on one end of the lay flat hose cushion (1) and by means of the metal extension (4), a special valve (3) that is flexible in all directions can be produced.

4. The device of claims 1 through 3,
**characterized in that**
on the inside or outside in the longitudinal or transverse direction it additionally has an elastic, not permanently adhesive swelling nonwoven sealing tape (2) that swells quickly upon contact with water and has a mass per unit area of 480 g/m².

5. The device of one of claims 1 and 4,
**characterized in that**
on sealing of cable conduit pipes (7) penetrated by cables (8) and/or cable pipes (8) in the vicinity of contact points of cable conduit pipes (8) and/or cable conduit pipes (7), a wrapping comprising a swelling nonwoven sealing tape (2) with or without the parting foil is employed, and at the nip, filler elements or swelling nonwoven sealing stars (9) are located, which are produced from sealing tape material (2).

6. The device of claim 5,
**characterized in that**
the swelling nonwoven sealing stars for insertion between two or more cables, are produced from two swelling nonwoven sealing tapes (2), placed one above the other, with two longitudinal seams and one transverse seam (10) and/or two swelling nonwoven sealing tapes placed one above the other, having a longitudinal weld seam (9) that is ≥ 5 mm.

7. The device of one of claims 1 through 6,
**characterized in that**
the lay flat hose cushion (1) in combination with a water/fire penetration protection device, when used longitudinally in expansion joints (27) or when used circularly in conduits (7) laid with cables and/or pipes (8), is equipped as a pressurized-watertight barrier layer, which is produced with a possible monitoring measurement system (3) and a flexible fireproof band (28), sheathed with swelling nonwoven sealing tape (2) in the high-frequency welding process (9), as a means (27) of preventing fire penetration.

8. The device of claim 1,
**characterized in that**
the lay flat hose cushion (1) is filled with gaseous, pulverized, or liquid media, swelling nonwoven sealing tapes (2, 17) and/or magnetic or lead bands.

9. The device of claims 1, 2, 3 and 4,
**characterized in that**
the lay flat hose cushion (1) is adapted in length to the circumference of the conduit (7) and in length to the expansion joint (6'), as well as in widths of from 135, 285, or 420 mm (6").

10. The device of claims 1, 2 and 8,
**characterized in that**
the water leakage and/or protection lay flat hose cushion device (1, 16, 20, 21) is produced from one or more basic elements, laid one above the other or side by side in the form of yard goods in widths of up to 12 m and in lengths of up to 100 m, by track gas welding so as to be tension- and pressure-fast with one another all the way around and joined on one side to a swelling nonwoven sealing tape (2) by means of elastic adhesive.

11. The device of claims 1, 2 and 3,
**characterized in that**
the water leakage protection device or lay flat hose cushion (16, 20, 21) is preferably produced with one or more swelling nonwoven sealing tape layers (17) in the interior that are glued to one another, with a mass per unit area of 480 g/m².

12. The device of one of claims 1, 4, 5, 7, 10 and 11,
**characterized in that**
the swelling nonwoven sealing tape (2, 17) of 480 g/m² is made from a mechanically solidified PP nonwoven with a water-absorbent polymer that swells quickly when exposed to water.

13. The device of one of claims 1, 2, 3, 7, 8, 9, 10 and 11,
**characterized in that**
the lay flat hose cushion (1, 6', 6", 16, 20, 21) is produced from a folded band or hose which depending on the field of use consists of thermoplastic, elastomers, and/or relatively inflammable thermoplastic/elastomer mixtures, and these substances have metal and/or metal-free inlays.

14. The device of one of claims 1, 2, 3, 7 through 11 and 13,
**characterized in that**
the tape (1"') of the lay flat hose cushion (1, 6', 6", 16, 20, 21) is produced preferably from at least one five-layer thermoplastic composite film (1"') having the following structure:
| | | | |
|---|---|---|---|
| - | 150-250 µm PE | - | 150-250 µm PE |
| - | 15-30 µm PET | - | 15-30 µm PET |
| - | 9-23 µm ALU | - | 9-23 µm BLEI |
| - | 15-30 µm PET | - | 15-30 µm PET |
| - | 150-250 µm PE | - | 150-250 µm PE. |

15. The device of one of claims 1, 2, 3, 7, 8, 9, 13 and 14,
**characterized in that**
with the furnished valve closure cap, the lay flat hose cushion has a total leakage rate of L = ... 5.5 ≤ 6.2 x 10-8 mbarl/s, equivalent to 2.7 mbarl/year.

## Revendications

1. dispositif pour la protection de la pénétration d'eau et de feu dans les espaces intermédiaires et dans les espaces creux par le biais de joints de dilatation (11,12,14) dans les lots, les canaux de câble (7,8), les exécutions de bâtiments (7,8) qui sont connotées par des câbles et/ou des tuyaux et qui servent selon les impératifs en qualité de dispositifs de protection contre les incendies ou le cas échéant contre les fuites (20), décharges, réservoirs, conteneurs de transport et/ou de sécurité dans le secteur maritime,
Est caractérisé de sorte que
Le dispositif se compose d'un tampon de tuyau plat (1) fixé en longueur (6) et en largeur (6) qui est équipé sur les côtés extérieurs d'un ruban d'étanchéité non-tissé gonflable (2) et que le tampon de tuyau plat de fuites et le cas échéant de protection (1) est muni à l'intérieur au minimum d'un ruban d'étanchéité non-tissé gonflable (17) présentant au côté longitudinaux (6) et au côté transversal (6) des obturateurs résistant à la tractation (18) rempli et évacué au minimum via une vanne pneumatique métallique revêtu de matière plastique (3) avec extension de soupape (4) et qui peut être équipé selon les impératifs d'un système de surveillance radio et le cas échéant de contrôle (3).

2. dispositif selon la revendication 1
Est caractérisé de sorte qu'
Un ensemble monocouche circulaire ou bien allongé et/ou un ensemble allongé en deux couches du tampon de tuyau plat (1) est prévu où la soupape (3) est reliée par le biais d'une extension de soupape (4) pour un taux de fuite de 5,5 mbar/s dans le procédé de soudure thermoscellable détachable au tampon de tuyau plat (1).

3. dispositif selon les revendications 1 et 2
Est caractérisé de sorte que
Le tampon de tuyau plat (1) est disposé dans le champ d'application en qualité d'élément individuel horizontalement, verticalement, en circulaire plein ou en demi-circulaire, en circonférence ou encore en longueur de segments de joints de dilatation où la vanne pneumatique (3) se trouve au minimum à l'extrémité du tampon de tuyau plat (1) et peut produire dans toutes les directions par le biais de l'extension métallique (4) une valve de distribution flexible (3).

4. dispositif selon les revendications 1 jusqu'à 3
Est caractérisé de sorte qu'
Il présente à l'intérieur comme à l'extérieur en direction longitudinale et en direction transversale par ailleurs un ruban d'étanchéité non-tissé gonflable (2) élastique non durablement adhésif rapidement intumescent aux contacts de l'eau avec un poids surfacique de 480 g/m2.

5. dispositif selon les revendications 1 et 4
Est caractérisé de sorte qu'
Un ficelage est utilisé lors du scellement de conduits de câble (7) traversés de câbles (8) et/ou de conduites de câbles (8) au niveau des points de contact des conduits de câble (7) et/ou des conduits de câble (7) faits de ruban d'étanchéité non-tissé gonflable (2) avec ou le cas échéant sans feuille de séparation et que des éléments de remplissage ou des zones d'étanchement non-tissées gonflables (9) se situent au niveau du gousset qui sont produites de matériel de ruban d'étanchéité (2).

6. dispositif selon la revendication 5
Est caractérisé de sorte que
Les zones d'étanchement non-tissées gonflables sont reliées pour l'insertion entre deux ou plusieurs câbles de deux bandes d'étanchéité non-tissées gonflables (2) superposées à deux soudures longitudinales et à un scellement transversal (10) et/ou à deux bandes d'étanchéité non-tissées gonflables superposées avec une soudure longitudinale de 5mm.

7. dispositif selon les revendications 1 jusqu'à 6
Est caractérisé de sorte que
Le tampon de tuyau plat (1) combiné au dispositif de protection de pénétration d'eau et de feu est équipé en application allongée dans les joints de dilatation (27) ou en application circulaire dans des canaux (7) de câbles et/ou de tubes (8) en tant que couche barrière d'eau sous pression dense produite avec un système de surveillance possible (3) et avec un ruban d'étanchéité non-tissé gonflable (2) dans le procédé de soudure à haute fréquence (9) dans une barrière coupe-feu flexible entourée (28) en tant que protection contre la pénétration de feu (27).

8. dispositif selon la revendication 1
Est caractérisé de sorte que
Le tampon de tuyau plat (1) est rempli de moyens gazeux pulvérisés ou liquides, de rubans d'étanchéité non-tissés gonflables (2,17) et/ou de bandes en aimant ou en plomb.

9. dispositif selon les revendications 1,2, 3 et 4
Est caractérisé de sorte que
Le tampon de tuyau plat (1) est adapté en longueur au volume du canal (7) et en largeur au joint de dilatation (6) et qu'il est produit dans les largeurs de 135, 285 et 420 mm (6).

10. dispositif selon les revendications 1,2 et 8
Est caractérisé de sorte que
Le dispositif de fuite d'eau et/ou de protection du tampon de tuyau plat (1, 16, 20, 21) est produit d'un ou de plusieurs éléments de base superposés en tant que produit en mètres illimité en largeur de jusqu'à 12 mètres et en longueur de jusqu'à 100 m en soudure de bande de gaz tout autour résistant à la tractation et à la pression et est relié unilatéralement au ruban d'étanchéité non-tissé gonflable (2) par le biais d'une matière élastique.

11. dispositif selon les revendications 1,2 et 3
Est caractérisé de sorte que
Le dispositif de fuite d'eau et/ou de protection du tampon de tuyau plat (1,16, 20, 21) est produit préférentiellement à l'intérieur avec des couches de rubans d'étanchéité non-tissés gonflables (17) de 480 g/m2 collés entre eux.

12. dispositif selon l'une des revendications 1,4,5,7,10 et 11
Est caractérisé de sorte que
Le ruban d'étanchéité non-tissé gonflable (2,17) de 480 g/m2 est produit d'une nappe PP mécanique solidifiée de polymère intumescent absorbant l'eau rapidement.

13. dispositif selon l'une des revendications 1,2,3,7,8,9,10 et 11
Est caractérisé de sorte que
Le tampon de tuyau plat (1,6,6,16,20,21) est produit d'une bande plissée ou d'un tuyau composé selon le champ d'application de thermoplaste, d'élastomère et/ou de mixtures de thermoplaste et d'élastomère difficilement inflammables où ces matières présentent des apports métalliques et/ou exempts de métaux.

14. dispositif selon l'une des revendications 1,2,3,7 jusqu'à 11 et 13
Est caractérisé de sorte que
La bande (1) du tampon de tuyau plat (1,6,6,16,20,21) est produite au minimum et préférentiellement d'une feuille composite en thermoplaste à cinq couches (1) présentant la structure suivante :
| | |
|---|---|
| -150-250 µm PE | -150-250 µm PE |
| -15-30 µm PET | -15-30 µm PET |
| -9-23 µm ALU | -9-23 µm ALU |
| -15-30 µm PET | -15-30 µm PET |
| -150-250 µm PE | -150-250 µm PE |

15. dispositif selon l'une des revendications 1,2,3,7,8,9,13 et 14
Est caractérisé de sorte que
Le tampon de tuyau plat présente un taux de fuite de L=.....5,5<6,2x10-8 mbarl/s correspondant à 2,7 mabarl/par an avec la coiffe d'extrémité de la vanne livrée.
